# EUROPEAN PATENT SPECIFICATION

(11) **EP 1 283 630 B1**
(45) Date of publication and mention of the grant of the patent: **22.02.2006**
(21) Application number: 02017299.5
(22) Date of filing: 01.08.2002
(51) Int. Cl.: H04L 29/06, H04L 12/56

(54) **Network routing using an untrusted router**
Netzwerkrouting unter Benutzung eines ungesicherten Routers
Acheminement dans un réseau utilisant un routeur non sécurisé

(30) Priority: 07.08.2001 US 922642
(43) Date of publication of application: 12.02.2003
(73) Proprietor: ITT MANUFACTURING ENTERPRISES, INC., Wilmington, Delaware 19801 (US)
(72) Inventor: Haight, Charles F., Pine Brook, New Jersey 07058 (US); Bertrand, John, Upper Nyack, New York 10960 (US)
(74) Representative: Esser, Wolfgang

(56) References cited:
- WO-A-01/44904
- US-A- 5 778 174
- US-A- 5 898 784
- US-A- 5 991 300

## Description

### Field of the Invention

The invention relates to network communications methods and systems. More particularly, it relates to routing data of multiple levels of security in a data communication network.

### Description of the Related Art

Over the past several years the world has witnessed tremendous advances in commercial networking technologies. Many of the advances concern routing techniques and devices used in commercial networks, and networks of networks often referred to as the Internet. Typically, commercial routers are used in unsecured environments, at least from a data perspective. That is, commercial routers have been developed for commercial use without regard to supporting information classified according to multiple levels of security. Although commercial routing devices typically undergo many reliability and quality tests, they are not designed, nor are they tested, with the goal of handling multiple levels of security classification.

In contrast to commercial environments, networking devices for use in military applications are often required to support multiple levels of security classification. Multilevel security (MLS), according to the *National Information Systems Security (INFOSEC) Glossary,* NSTISSI No. 4009, January 1999 (Rev. 1), is a concept of processing information with different classifications and categories that simultaneously permits access by users with different security clearances and denies access to users who lack authorization. Multilevel security and MLS, as used here, encompass simultaneous access by users with different levels of access authority that is not necessarily limited to a national security clearance level.

Information classified according to a government or military organization's security classification is referred to here as classified information. Information used in a commercial environment and to which access is to be limited is referred to as proprietary information. More generally, confidential information refers to information to which access is to be limited and encompasses both classified and proprietary information.

In an MLS environment, it is important to use a trusted computing system, which refers to the totality of protection mechanisms within a computer system, including hardware, firmware, and software, that is, the combination responsible for enforcing an organization's security policy. In many trusted computing systems that process sensitive or classified information, especially national security information, information systems' security methods and devices are used to protect the information systems against unauthorized access to or modification of information, whether in storage, processing or transit, and against the denial of service to authorized users, including those measures necessary to detect, document and counter such threats. Such information systems often employ red/black concepts and techniques. "Red/black" refers to separation of electrical and electronic circuits, components, equipment, and systems that handle national security information (red) in electrical form from those that handle non-national security information (black) in the same form, as described in the *National INFOSEC Glossary.* Devices and software components that operate in a red environment for processing classified data undergo extensive testing to ensure the integrity of the classified data passing through those components. Such testing can be very lengthy and very expensive.

Unfortunately, because of the extensive design and testing to ensure the integrity of red data, many military computing systems have not been able to take full advantage of the tremendous advances in routing technology taking place in the commercial networking world. Accordingly, there is a need to use commercial networking equipment, particularly network routers, in computing environments that must support MLS systems, yet without requiring the extensive testing to certify that equipment to process red data. Hence, there is a need to employ untrusted commercial network routers in computing systems that handle multilevel security data.

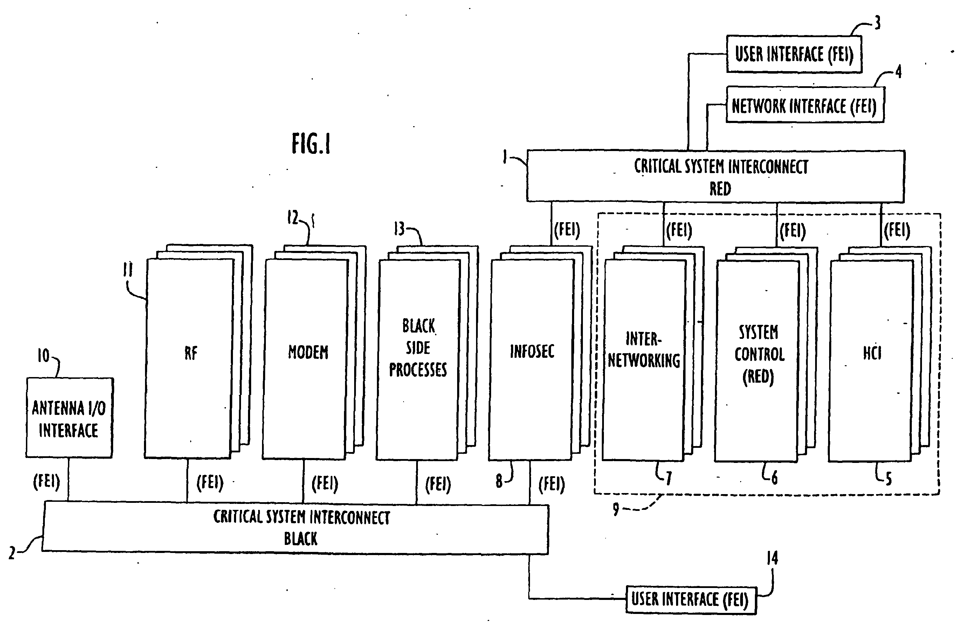

A Joint Tactical Radio System (JTRS) software radio is an example of equipment that must operate in a MLS environment. A software radio is a radio that uses computer software to perform a variety of functions in the process of converting voice or data information to and from a radio frequency (RF) signal. The architecture of the JTRS software radio is designed, as shown in Fig. 1, in a modular manner in order to use commercial-off-the-shelf (COTS) components and thereby leverage COTS development and reduce the overall development costs of the JTRS software radio. The architecture depicted in Fig. 1 is a conceptual diagram illustrating major functional units, and does not necessarily illustrate physical relationships.

The software radio notional architecture shown in Fig. 1 includes a red critical system interconnect (CSI) 1 and a black CSI 2. The red CSI couples functional entity interfaces (FEI), such as a user interface 3 or a network interface 4, to various red FEI units. Those units can include a human-computer interface (HCI) 5, a red system control unit 6, an intemetworking unit 7 and an information security (INFOSEC) unit 8. The red CSI allows various types of red FEI units to be used on the red side of the radio. For example, the internetworking unit 7, the red system control unit 6 and the HCl 5 can all reside on a single processor board 9, such as a Pentium class microprocessor circuit board that connects to the red CSI.

The INFOSEC unit 8 connects to the black CSI on the black side of the software radio, and to the red CSI on the red side of the radio, and forms a boundary between the red and black environments. Connected to the black CSI are an antenna I/O interface unit 10 for sending and receiving RF signals, RF units 11, modems 12, and various other black side processes 13. Also, a user interface 14 can be connected to the black CSI as shown in Fig. 1. The black CSI allows various types of COTS functional entity interface units to be used in the software radio, such as various types of commercial modems, for example.

The intemetworking unit 7 includes a router for routing messages, received from the user interfaces on the red side of the radio or received over the air after black side INFOSEC processing, to destinations on either the red or black sides of the radio. For destinations on the black side of the radio, the router must send the messages through the INFOSEC 8.

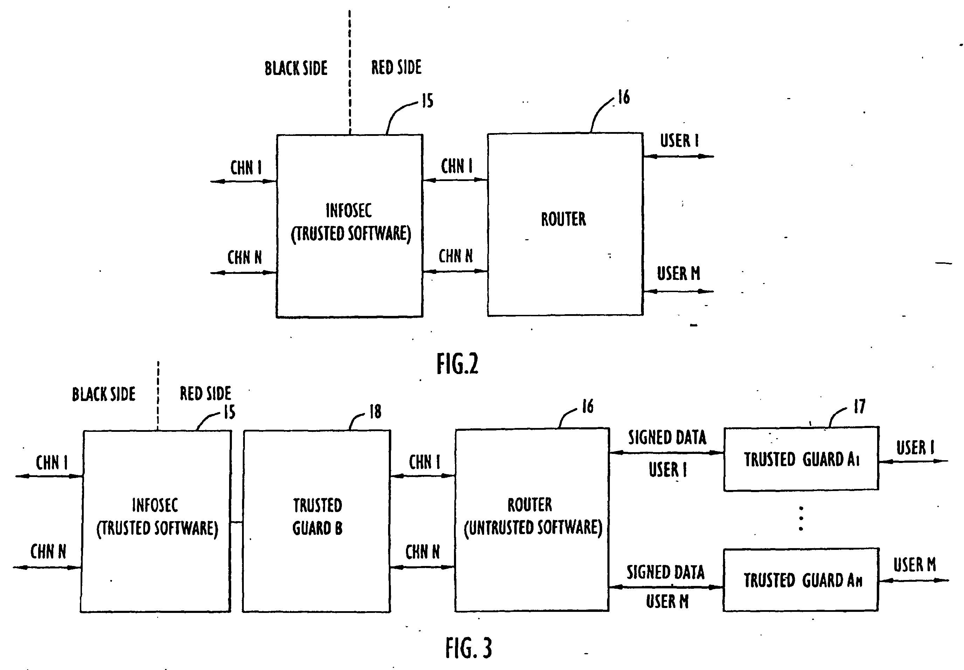

A multiple-input, multiple-output information system capable for use in the JTRS software radio is shown in Fig. 2 in which the INFOSEC unit 15 forms a boundary between red and black environments. On the black side of the system the INFOSEC interfaces with input/output channels 1 through N. Similarly, on the red side of the system the INFOSEC interfaces with corresponding input/output channels 1 through N that connect to a router 16. The router 16 is coupled to a plurality of users, here, user 1 through user M. In such an environment the data streams may be at different security/compartment levels if it is a government information system, or the data steams may belong to different communities of interest if in a commercial environment.

The router 16 receives data, either from a user or from one of the channels, and routes it to the appropriate destination. For example, user 1 may send a message addressed to a destination reached using channel N. The router 16, using routing tables and routing algorithm software, receives the message from user 1 and based on the address determines a route over which to send the message. This entails attaching routing information to the message and outputting the message over the channel the router determines services the chosen route. The router 16, through the use of its routing tables and algorithms, determines that the message is to be output on channel N, for example. Accordingly, the router outputs the message on channel N with the added routing information attached to the message. Similarly, when the router receives a message on one of the N channels, it examines the routing information in the received message, determines the user or channel to which to send. the message, and outputs the message to that user or channel.

Because the router 16 receives data streams that may be at different security/compartment levels (govemment system) or may belong to different communities of interest (commercial system), the router in Fig. 2 must be tested to ensure it can be trusted with those data streams.

US-A- 5,898,784 describes a system for passing encrypted network data packets over an internal network to a public network interface computer and over a public network connected to the network interface computer, by determining a virtual tunnel routing information and using an algorithm and secret key to encrypt and decrypt data on the source and destination computer.

It is highly desirable to use standard commercial software for the router because of the rapid technological advances and routing evolution occurring in the commercial sector. However, commercial routing software does not undergo the rigorous and extensive testing required to certify it as trusted and therefore a commercial router has no level of trust. Yet, there is a strongly felt need to develop an approach that uses commercial routing techniques and software in an MLS environment and guarantees that data from one security level will not get released to users or networks at a different level without following the safeguards specified by the information system's security policy.

### SUMMARY OF THE INVENTION

Therefore, in light of the above, and for other reasons that will become apparent when the invention is fully described, an object of the invention is to use a router that has not been certified to process data of multiple security levels, to provide routing information for a message containing confidential data.

A method in accordance with the invention generates a transmission frame for routing a first message the first message having a header and first data, the method ensuring that security of data is not compromised by a router and comprising: generating, with a first trusted guard apparatus, a second message by substituting dummy data for the first data in the first message: supplying the second message to the router and supplying the first data to a second trusted guard apparatus; adding routing information to the second message with the router; and generating, with the second trusted guard apparatus, the transmission frame by substituting the first data for the dummy data in the second information message after the routing information is added to the second message.

An apparatus in accordance with the invention generates a transmission frame for routing a first message, the first message having a header and first data the apparatus ensuring that security of data is not compromised by a router and comprising a first trusted guard apparatus for generating a second message by substituting dummy data for the first data in the first message; said first trusted guard apparatus supplying said second message to said router and supplying the first data to a second trusted guard apparatus adding routing information to the second message within the router; and generating, within the second trusted guard apparatus the transmission frame by substituting the first data for the dummy data in the second information message after the routing information is added to the second message.

The first trusted guard apparatus, according to the invention, sends a data message to a router, in which the data message has information classified at a first security level. The apparatus includes a source authentication unit configured to receive the data message containing the information classified at the first security level, and to add to the data message source information concerning the source of the data message. The apparatus also includes a data integrity unit coupled to the source authentication unit and configured to transform the information classified at the first security level to include information for determining the integrity of the information classified at the first security level. It also includes a data substitution unit coupled to the source authentication unit and configured to generate a dummy data message by substituting dummy data for the information classified at the first security level, and outputting the dummy data message to the router.

A transmission frame for delivering confidential data to a destination node, according to the invention, includes a dummy data field containing dummy data, classified at a first security level, substituted for confidential data classified at a second security level different from the first security level. The transmission frame also includes a message header field containing information identifying the destination node, and a routing field containing routing information for use in routing the transmission frame to the destination node.

The above and still further objects, features and advantages of the invention will become apparent upon consideration of the following descriptions and descriptive figures of specific embodiments thereof. While these descriptions go into specific details of the invention, it should be understood that variations may and do exist and would be apparent to those skilled in the art based on the descriptions herein.

### BRIEF DESCRIPTION OF THE DRAWINGS

Fig. 1 is a block diagram illustrating an architecture of a software radio.
Fig. 2 is a block diagram of a portion of a computing system, such as the software radio of Fig. 1, using a router and an INFOSEC.
Fig. 3 is a block diagram of a computing system using an untrusted router in combination with an INFOSEC and a trusted guard unit.
Fig. 4 is a diagram showing a detailed view of a trusted guard unit A.
Fig. 5 is a flowchart illustrating a process of routing data according to the invention.
Fig. 6 is a block diagram of a computing system using an untrusted router, a trusted guard unit and showing data flows according to certain aspects of the invention.
Fig. 7 is a detailed view of a trusted guard with a dummy message generator.
Fig. 8 is a detailed view of a trusted guard unit that combines routing information from an untrusted router with signed data from another trusted guard unit.
Figs. 9A-D are diagrams of data packets at various stages of a routing process according to aspects of the invention.
Fig. 10A-G are diagrams illustrating various data flows in a software radio.

### DETAILED DESCRIPTION

Preferred embodiments according to the present invention are described below with reference to the above drawings, in which like reference numerals designate like components.

When dealing with data processed by untrusted software between a source and a destination, it is necessary to prove at the destination point that the source information is accurate (source authentication) and that the data has not been modified (data integrity). If source authentication and data integrity are provided at the source and destination by trusted software and/or hardware entities, referred to here as trusted guards, then the untrusted router cannot interfere undetected with that information that is sent from the source to the destination and the trusted entities can enforce the computing system's security policy.

Fig. 3 is a block diagram showing a trusted guard A 17 coupled with users 1 through M and coupled to ports 1 through M of the router 16. Another trusted guard B 18 is coupled to channels 1 through N of the router 16 and to the INFOSEC 15. Trusted guard B can be included as part of the INFOSEC 15.

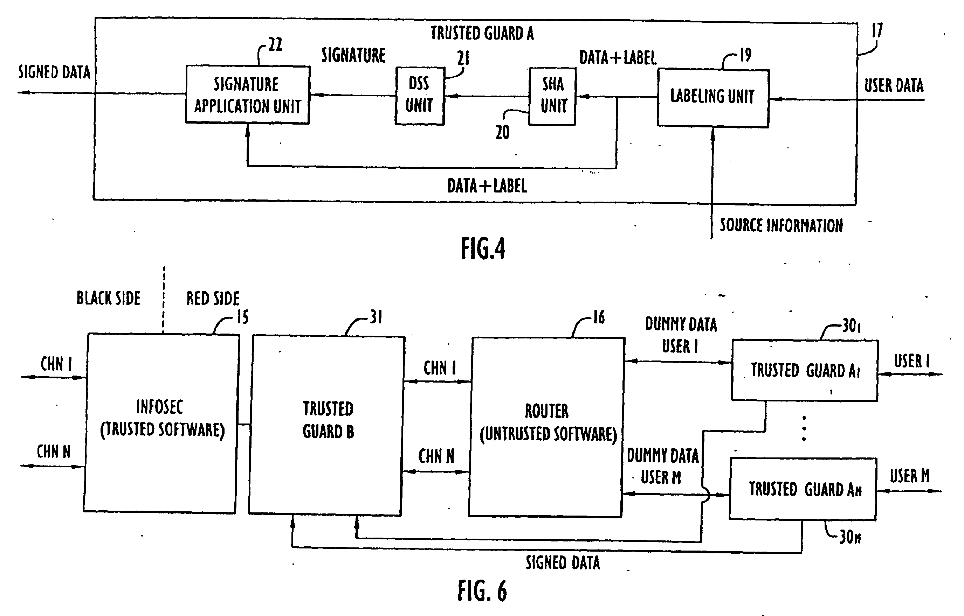

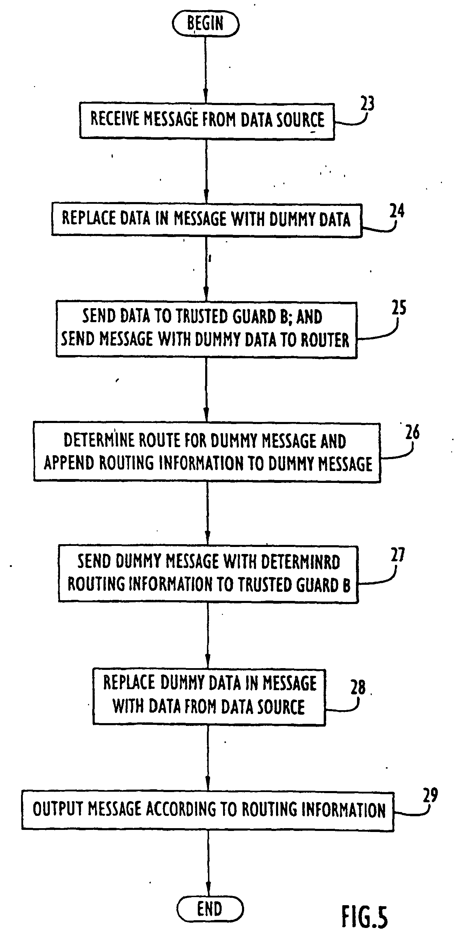

A block diagram of trusted guard A is shown in Fig. 4. The trusted guard of Fig. 4 includes a labeling unit 19, a secure hashing algorithm (SHA) unit 20, a digital signature (DSS) unit 21 and a signature application unit 22. To provide source authentication the trusted guard's labeling unit 19 receives user data and source information and uses that information to attach a label to the data at its source. The label can include information about the source, such as, for example, a channel number, a security level, a packet number, the length of the packet and/or a time-of-day label. Further, if assurance requirements so dictate, the trusted guard can add other information to the data such as a packet number, a time stamp or a unique identifier such as an identifier cryptographically generated by a trusted guard. The trusted guards are initialized by the INFOSEC, preferably at the time of powering on the trusted guards. For example, the INFOSEC can initialize the trusted guards to operate at a specific security level depending on the guard's certification. The information provided by the labeling unit can be set at initialization. The SHA unit 20 can be used to reduce the amount of data by applying a hash algorithm to the labeled data and thereby reduce the computational complexity of the digital signature evaluation. Hashing can be used to reduce the complexity of using digital signatures, although it need not be used to practice the invention. The trusted guard can use well-known techniques to provide data integrity when sending data between trusted guards, such as by applying a digital signature to the labeled data. For example, a digital signature can be a number computed from the data being signed. An example of a digital signature is a check-sum computed from the data and label. Generally, however, a cryptographic procedure is used instead of a checksum, to ensure that a signature cannot be modified. An example of such a cryptographic procedure that can be used to ensure the integrity of the data is the AFIPS-specified Digital Signature (DSS) which is based on Public Key Encryption. The DSS unit 21 shown in Fig. 4 determines and outputs such a digital signature for the labeled data. The signature application unit 22 applies the signature to the labeled data received from the labeling unit 19, and outputs the labeled data with the signature as signed data. The trusted guard B 18, connected to the INFOSEC as shown in Fig. 3, receives the signed and labeled data from the router 16, authenticates it and verifies its integrity by using the signature and label in the data.

The trusted guard system shown in Fig. 3 would suffice for routing messages to their destinations and ensuring that the security of the data is not compromised, if the untrusted router 16 were not allowed to generate data. If that were the case, and the router not allowed to generate data, the router would not be able to masquerade as a data source since the router could not generate signed data, as the source and destination are trusted and are the only ones that have the keys required by the DSS unit. However, the router 16 must be allowed to generate data, such as routing tables, and transmit them to other routers. Accordingly, the approach of labeling, hashing and signing data is insufficient to ensure that the router 16 cannot, through malicious or faulty software, hold on to data and then transmit that data as part of its own data transmissions, since that might cause data at a higher classification level to be released to users who are not authorized to see that data.

The invention allows a router with untrusted software to be used in an MLS environment, yet ensures that the router does not release data from one security level to users or networks at a different level. This involves diverting data around the router that has the untrusted software, while using the router to supply routing information. An overall general process for using an untrusted router in an MLS environment is illustrated in Fig. 5. The process begins by trusted guard A receiving a message routed from a data source (23). The data in the message, which might be confidential and classified with a security level higher than a security level at which the router is certified, is removed and replaced with dummy data, such as a predetermined pattern of characters that is non-confidential (24). Alternatively, a pseudo random pattern can be cryptographically generated by the sending guard and validated by the receiving guard. The message with the dummy data (i.e., a dummy data message) is sent to the router 16, and the data removed from the message is directed around the untrusted router 16 and sent to trusted guard B to eventually match it with the dummy message once the router 16 determines the routing information (25). The router 16 receives the dummy message, determines a route for it to travel to reach its intended destination, and appends to the dummy message routing information specifying such a route (26). The router sends the dummy message with the routing information to trusted guard B where the data is diverted (27). Trusted guard B then replaces the dummy data in the message to which the routing information is appended with the data from the data source (28). Trusted guard B then sends the reconstructed message according to the routing information supplied by the router (29). In this manner, a router 16 with untrusted software is used to supply routing information without the untrusted router receiving data from the data source.

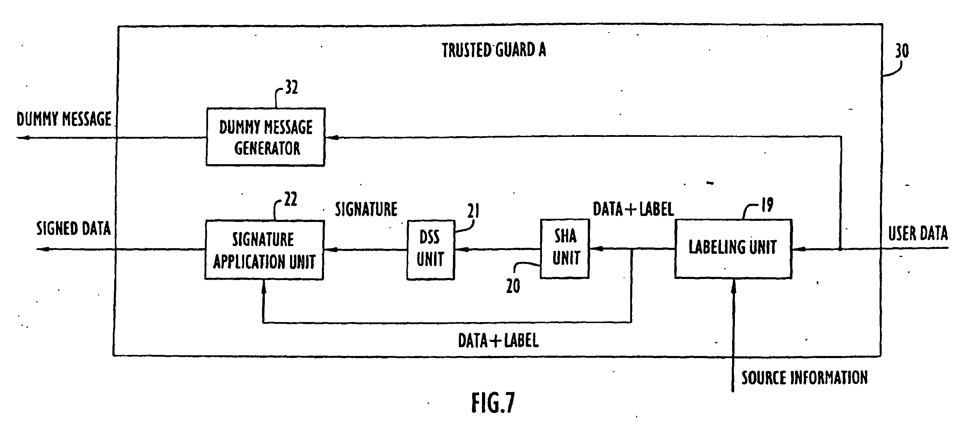

The operation of the untrusted router system of Fig. 3 is modified to perform a data diversion technique, as illustrated in Fig. 6. In the system shown in Fig. 6 a trusted guard A 30, coupled to users 1 through M and to the router, receives a message with data for delivery to a destination specified by an address in a header of the message. A detailed view of trusted guard A 19 is shown in Fig. 7. In addition to the trusted guard shown in Fig. 4, trusted guard A 30 also includes a dummy message generator 32. Trusted guard A 30, as described above, labels and applies a signature to the data. Alternatively, the trusted guard A compresses the labeled data using a hash algorithm or another data compression technique. Trusted guard A 30 sends the signed data (i.e., data + label + signature) over a trusted path that does not include the router, to a trusted guard B 31 that is coupled to the router 16 and INFOSEC 15. The dummy generator 32 receives the message supplied to trusted guard 30 from the user and replaces the data in the message with non-confidential dummy data that is classified at a security level the same as or lower than the security level of the router, and retains any headers in the message. An example of such non-confidential data is a predetermined pattern of characters or a pseudo random pattern that is cryptographically generated. Alternatively, the dummy message generator 32 can receive the message at any point in the trusted guard, so long as the message's header remains intact. Trusted guard A 30 then outputs the dummy message having the headers and non-confidential dummy data, to the router 16.

The router 16 receives the dummy message and based on the headers in the message determines a route for delivering the message to the intended destination. The router 16 then applies to the dummy message routing information specifying the determined route. For example, the router can apply the routing information by appending it to the dummy message. The router 16 then outputs the dummy message with the routing information to trusted guard B 31.

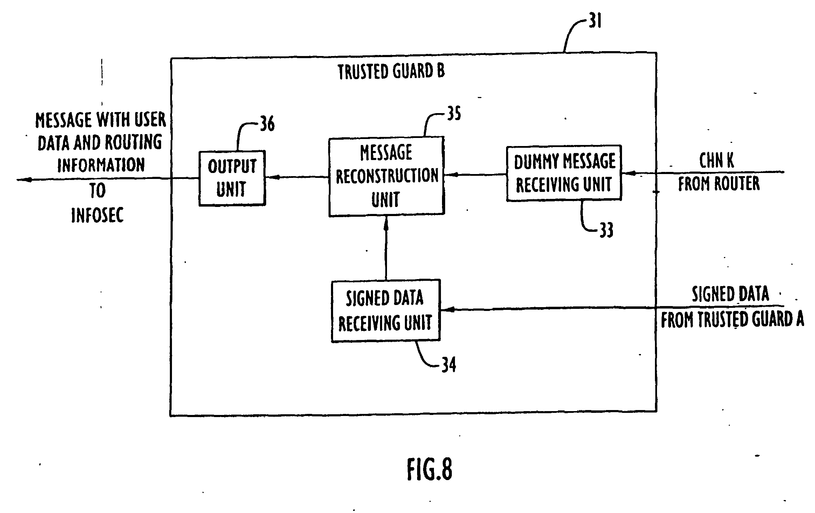

Trusted guard B 31 is shown in detail in Fig. 8 and includes a dummy message receiving unit 33, a signed data receiving unit 34, a message reconstruction unit 35, and an output unit 36. Signed data receiving unit 34 receives the signed data sent from the trusted guard A 30 and sends it to the message reconstruction unit 35 which holds it until the dummy message receiving unit 33 receives the corresponding dummy message from the router 16. The message reconstruction unit 35 then receives the signed data, matches headers, and replaces the dummy data with the signed data to form a reconstructed message. The reconstructed message includes the routing information, any original message headers and the signed data. The output unit 36 then outputs the reconstructed message to the INFOSEC 15, which performs conventional red/black isolation functions, and forwards the message to the intended destination along a path specified by the routing information.

Since the source and destination are trusted and are the only ones that have the keys required by the digital signature algorithms, the destination upon receiving the message uses its keys to unhash and authenticate the message. In this manner the message is routed and verified at the destination.

Trusted guard A can include the same structure and perform the same functions as trusted guard B, shown in Fig. 8, where trusted guard A also receives data from another trusted guard. Likewise, trusted guard B can include the same structure and perform the same functions as trusted guard A, shown in Fig. 7, where trusted guard B also sends data to another trusted guard.

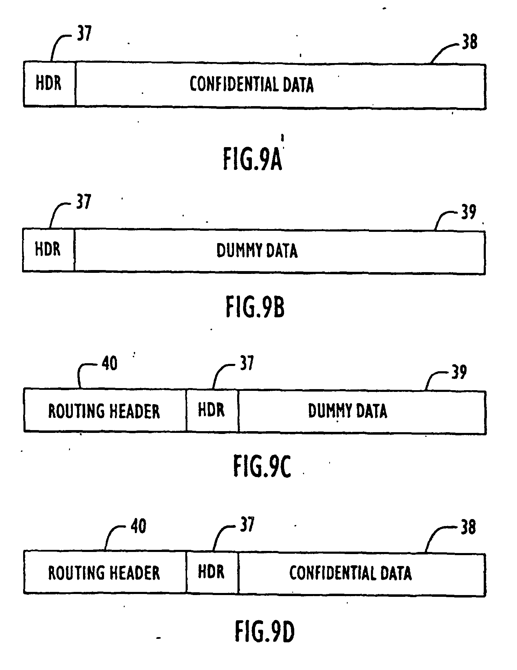

Figs. 9A-9D show examples of messages sent from the source through the trusted guard A and the untrusted router to the INFOSEC. A user, for example user 1 shown in Fig. 6, sends a message shown in Fig. 9A that contains data 38 that could be confidential and classified at a security level higher than a level at which the router is certified. The message in Fig. 9A also includes standard headers (HDR) 37 attached to the confidential data according to the networking protocols in use. Trusted guard 30, upon receiving the confidential data substitutes dummy data 39 for the confidential data and sends a dummy message, shown in Fig. 9B, to the router 16. The router 16, upon receiving the dummy message adds a routing header 40 to the dummy data 39 and header 37. The routing header 40 includes routing information for routing the message to the destination. The router 16 sends the dummy data message with the routing header, shown in Fig. 9C, to trusted guard B 31 by way of the appropriate channel according to the determined route.

Trusted guard A 30 sends the confidential data 38 that has been separated from the original message to trusted guard B 31. As discussed above, trusted guard A 30 can apply a hashing function to the confidential data, and can also apply a digital signature to the data. Trusted guard A 30 sends the signed confidential data to trusted guard B 31 by way of a trusted path separate from the router.

Trusted guard B 31 matches the signed data with the dummy message received from the router that contains the routing header 40. Trusted guard B 31 substitutes the signed confidential data 38 received from the trusted guard A 30 for the dummy data 39 contained in the message received from the router16. Thus, trusted guard B 31 forms the message, or transmission frame, shown in Fig. 9D that includes the routing header 40 that contains the routing information for delivering the message to the intended destination, the original headers 37 and the confidential data 38. Trusted guard B 31 then sends the message shown in Fig. 9D to the INFOSEC for transmission to the destination along the determined route. The process described above also operates in the reverse direction. When information arrives from channels 1 through N it is provided to one of the users 1 through M. In that case, trusted guards A and B operate with their roles reversed.

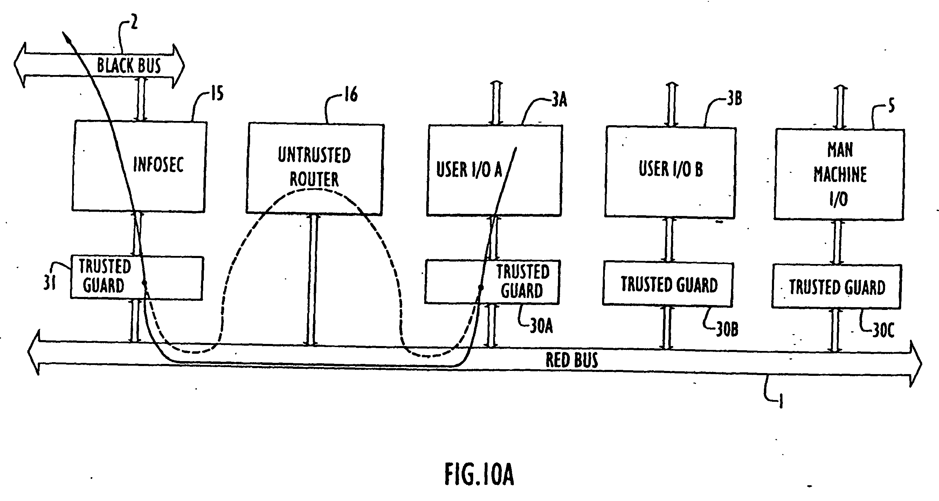

The trusted guards described above can be used in a variety of data flow scenarios for delivering data both to the red side and the black side of INFOSEC 15. Various such data flows are shown in Figs. 10A through 10G, in which the data flows represented by a solid line designate messages that contain data from a source, such as red data from a user. The dashed lines depict data flow of messages containing dummy data.

The data flow shown in Fig. 10A depicts a message originating from the red side of the INFOSEC and flowing to a destination on the black side. Here, a user A sends a message containing red data through the user A's I/O device 3A to a trusted guard 30A and over the red bus 1 to trusted guard 31 to INFOSEC 15 for delivery to a destination over black bus 2. In the manner described above, trusted guard 30A substitutes dummy data for the red data in the message to create a dummy message. Trusted guard 30A sends the dummy message to untrusted router 16 which adds routing information to the dummy message, as depicted by the dashed line. The router 16 sends the dummy message with the routing information to trusted guard 31. Meanwhile, trusted guard 30A sends the message data to the trusted guard 31 across red bus 1, as depicted by the solid line. Trusted guard 31 then reconstructs the message by combining the routing information in the dummy message with the red data received from trusted guard 30A. Trusted guard 31 then sends the reconstructed message to the INFOSEC for delivery to a transmitter on the black bus 2.

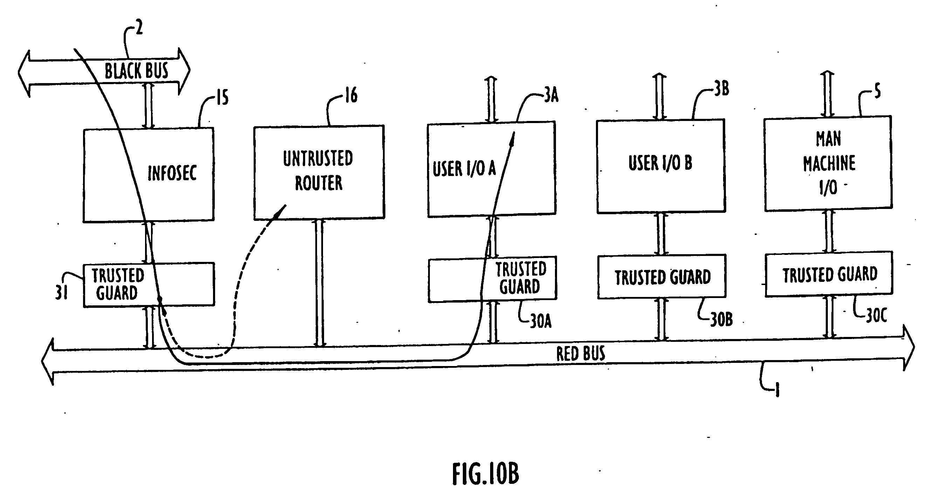

Data flowing in the reverse direction is shown in Fig. 10B. Here, a message sent from a source outside the local red environment shown in Fig. 10B is received by INFOSEC 15 from black bus 2. In the case of the JTRS software radio the message, likely in the form of a data packet, is received by the radio's antenna and demodulated on the black side of the INFOSEC 15. The demodulator forwards the message to the INFOSEC 15 over the black bus 2 and the INFOSEC 15 passes the received message to trusted guard 31. The trusted guard 31 generates a dummy message with the header information from the received message and dummy data substituted for the data in the message, and forwards the dummy message to untrusted router 16, as depicted by the dashed line. The INFOSEC 15 decrypts the message's data and passes the decrypted data to trusted guard 31. The router 16 returns the I/O address for the destination to the trusted guard 31. In the example shown in Fig. 10B the router returns the I/O address for user A's I/O device 3A. The trusted guard 31 then verifies the messages destination, and assembles the decrypted data with the header information returned from the router. Before sending the decrypted data to the destination I/O device indicated by the header information returned from the router, the trusted guard 31 verifies that the indicated destination is authorized to receive information at the security level of the decrypted data. Once verified the trusted guard 31 hashes and signs the message and sends the assembled message with the decrypted data to the destination I/O device via the red bus 1, here, user A's I/O device 3A, as depicted by the solid line.

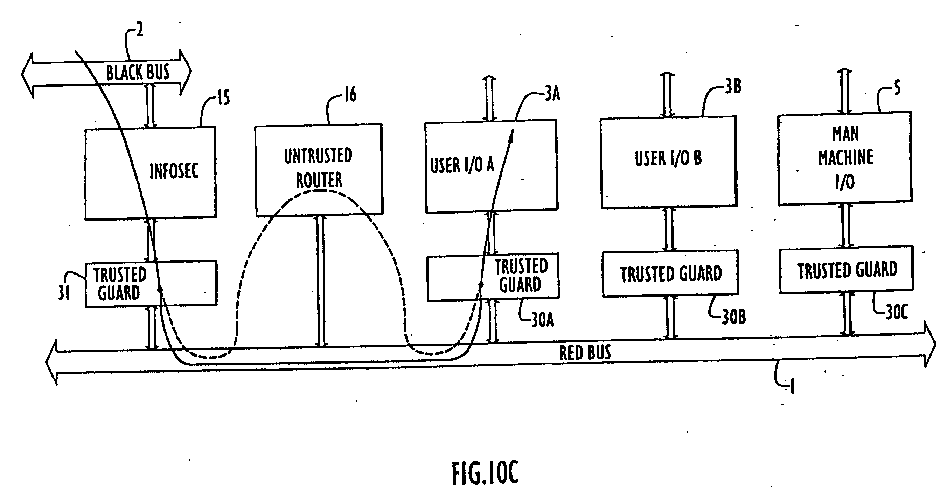

Alternatively, the data flow shown in Fig. 10B can be achieved by router 16 forwarding the dummy message to the trusted guard servicing the destination I/O device as shown in Fig. 10C. Here, trusted guard 31 places the data from the received message on the red bus 1 with some type of identifier, such as, for example, a packet number, date/time stamp, etc. The dummy message generated by trusted guard 31 would have the same identifier (e.g., packet number, date/time stamp, etc.). All trusted guards on red bus 1 would see the data placed on the red bus, but only the guard(s) to which the dummy message is sent will take the data off the red bus and supply it to the respective user I/O device. The trusted guard(s) that receive the dummy message can detect the corresponding data on the red bus by matching the identifiers (e.g., packet number, date/time stamp, etc.) In the example shown in Fig. 10C, user A's I/O device 3A receives the dummy message thus indicating that it is to receive the data placed on the bus. Trusted guard 30A then matches identifying information from the dummy message with the data on the red bus, and if there is a match it takes the data off the red bus, authenticates it and supplies the data to user A's I/O device 3A. The other trusted guards ignore the data on the red bus because they did not receive the dummy message from the router 16. The other trusted guards also ignore the data, if the data is labeled, because the attached label does not indicate that the data is destined for them.

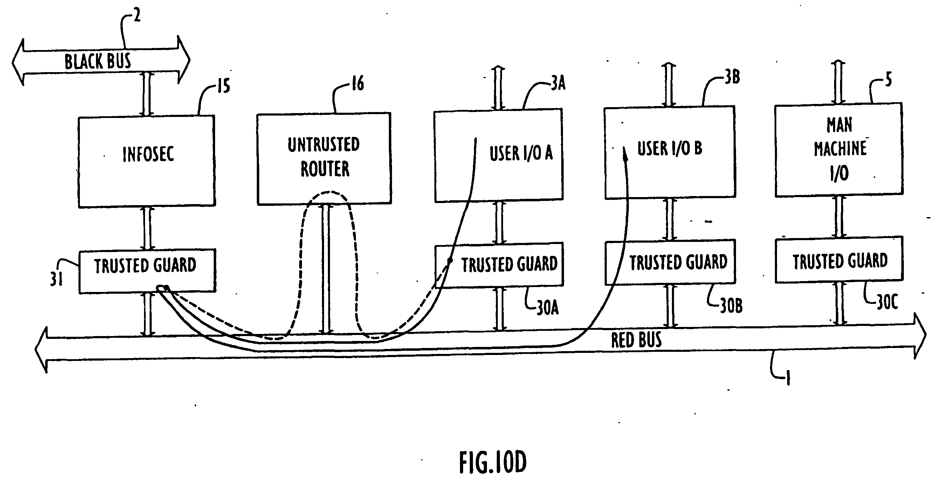

Fig. 10D depicts a data flow for the case in which a message is routed only within the red environment of the communication system. In Fig. 10D user A sends a message, via user A's I/O device 3A, to user B. Trusted guard' 30A receives the message from user A's I/O device 3A and substitutes dummy data for the red data in the message. The dummy message is sent to untrusted router 16 for application of routing information to the message, as depicted by the dashed line. Trusted guard 30A sends the message's red data to the INFOSEC 15 by way of trusted guard 31. The router 16 adds routing information to the dummy message and then sends it to the trusted guard that services INFOSEC 15, i.e., trusted guard 31. If the message's destination is local, that is, within the red environment shown in Fig. 10D, and the encryption requirements are the same for both users (e.g., not requiring radio transmission), then the message need not be sent to INFOSEC 15 for encryption/decryption services. Accordingly, trusted guard 31 reconstructs the message by assembling the red data with the header information received from the untrusted router 16 that contains the routing information. Trusted guard 31 forwards the reconstructed message data and header to the destination user I/O device indicated in the routing information, as depicted by the solid line. In the example shown in Fig. 10D the message is destined for user B, and accordingly, the reconstructed message is forwarded to user B's I/O device 3B via trusted guard 30B. Before allowing the message data to be released to user B's I/O device, the trusted guard 30B verifies that the data in the message is at the proper classification level for the destination indicated by the routing information.

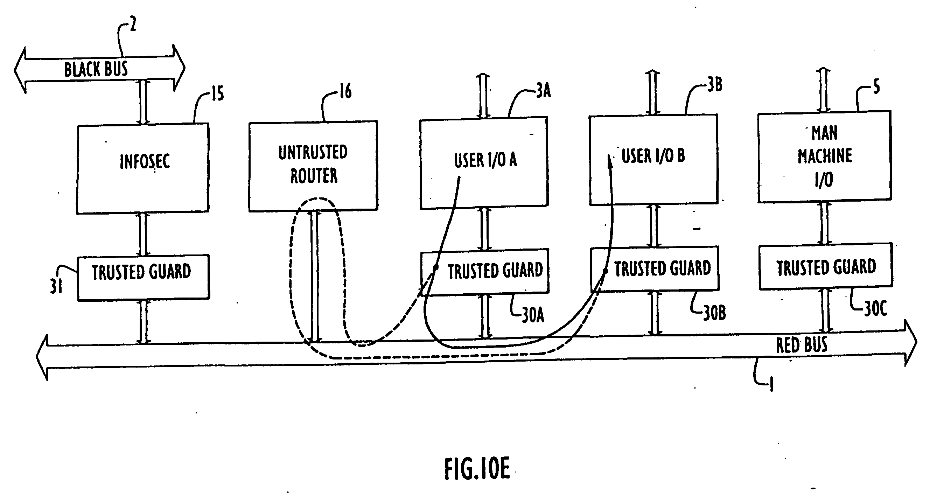

Alternatively, in situations where security access controls do not require the function of INFOSEC 15, the message can be routed without sending the data to either the router 16 or the INFOSEC 15. In that case, depicted in Fig. 10E, when sending a message between users in the same red environment the untrusted router 16 upon receiving the dummy message and determining the appropriate routing information can notify the destination trusted guard, in this example, trusted guard 30B, that the message is intended for user B. The router 16 can notify the destination trusted guard by sending it the dummy data message, as shown by the dashed line in Fig. 10E, with the routing information included in that message. This notification can occur by the router 16 routing the dummy data message to the destination. When the source trusted guard, in this example, trusted guard 30A, substitutes dummy data for the message data, it can place the message data on the red bus 1 for all trusted guards to see, as shown by the solid line. As described above, trusted guard 30A can add identifying information to both the dummy data message and the message data to facilitate later matching. Only the trusted guard receiving the dummy data message from the router, here trusted guard 30B, will then identify the data on the red bus 1 as matching the dummy data message and take the message data off of red bus 1. The destination trusted guard can verify and authenticate the data, and allow the message data to be passed to user B only if user B is authorized to access the message data.

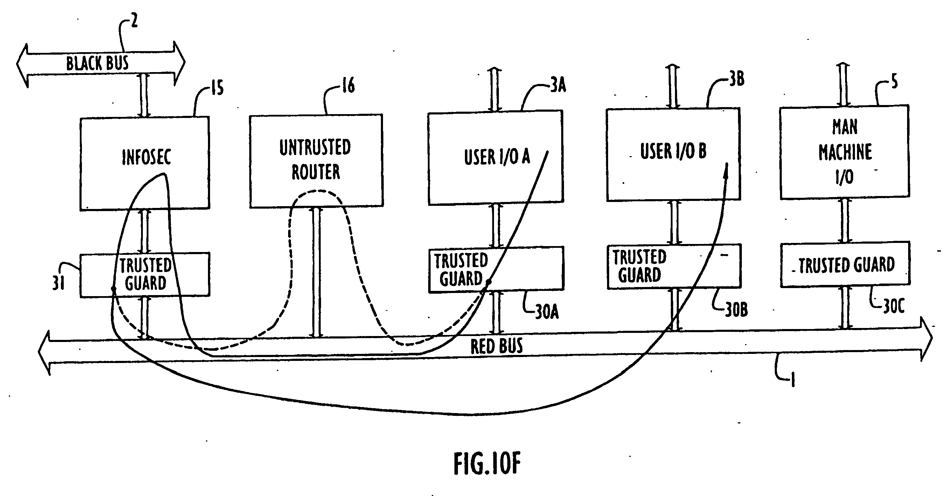

Another data flow example is shown in Fig. 10F. In this example the data path is the same as shown in Fig. 10D except the encryption/decryption requirements are different. That is, here, user A sends a message intended for user B, however the message must be encrypted due to channel setup requirements designated at instantiation. Here, trusted guard 30A separates the message data from the message's header information and uses that header information to generate a dummy message containing dummy data. The dummy message, with the message's header information, is sent to untrusted router 16 to add routing information, as shown by the dashed line. The message data is supplied to INFOSEC 15 via trusted guard 31, as shown by the solid line. The untrusted router, upon determining the appropriate route, provides the routing information to trusted guard 31, preferably in the form of routing information added to the header of the dummy message. The untrusted router 16 then sends the dummy message to trusted guard 31, as depicted by the dashed line. In this example the message must be encrypted or decrypted since the user's encryption/decryption requirements are different. INFOSEC 15 performs the appropriate encryption/decryption on the message data according to the channel setup requirements for users A and B, and supplies the appropriately encrypted or decrypted message data to trusted guard 31. Trusted guard 31 then adds the routing information supplied by untrusted router 16 to the message data that is to be delivered to user B, thereby reconstructing the message. The trusted guard 31 sends the reconstructed message to user B according to the routing information, as depicted by the solid line. Trusted guard 30B receives the reconstructed message and verifies and authenticates the message before supplying it to user B's I/O device 3B.

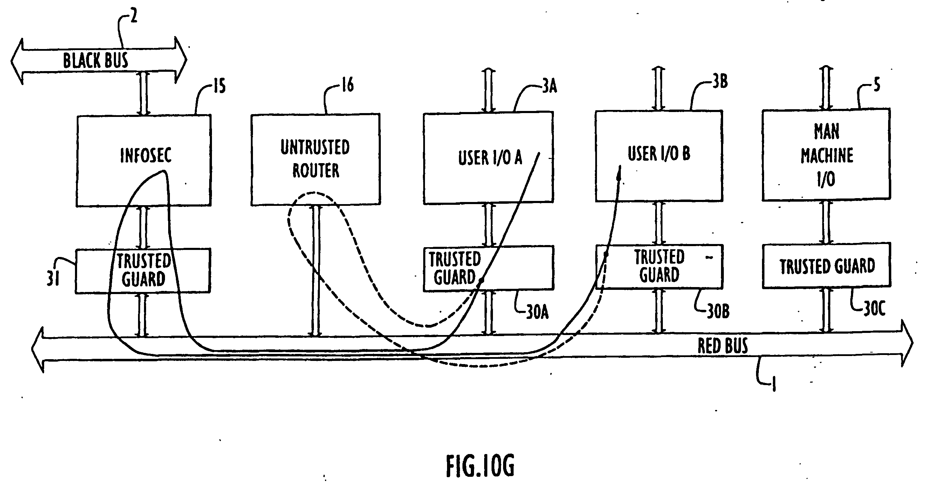

Alternatively, the data flow depicted in Fig. 10F can be accomplished in other ways. For example, as shown in Fig. 10G, trusted guard 30A can send the message data to the INFOSEC 15, as depicted by the solid line, for encryption/decryption. The INFOSEC 15, after encrypting/decrypting the message data, can place that data on red bus 1 via trusted guard 31. The router 16 can notify the destination trusted guard of the message, such as by sending the dummy message to the destination trusted guard, in this example, trusted guard 30B, as depicted by the dashed line. The destination trusted guard, here, trusted guard 30B, upon receiving the dummy message matches identifying information in the dummy message with identifying information in the data on the red bus. If they match trusted guard B takes the encrypted/decrypted data off of red bus 1. Trusted guard 30B then verifies and authenticates the message data and supplies it to user B's I/O device if it's security level is adequate for the security classification of the message data.

It will be understood that the functions of the trusted guards, and the units within the trusted guards such as the units shown in Figs. 7 and 8, can be performed using computer programs controlling computer hardware and firmware. It will also be understood that such computer programs can be recorded on computer-readable media, such as magnetic and optical disks, and can be transmitted in a computer-readable signal.

Having described preferred embodiments of network routing using an untrusted router, it is believed that other modifications, variations and changes will be suggested to those skilled in the art in view of the teachings set forth herein. It is therefore to be understood that all such variations, modifications and changes are believed to fall within the scope of the present invention as defined by the appended claims. Although specific terms are employed herein, they are used in their ordinary and accustomed manner only, unless expressly defined differently herein, and not for purposes of limitation.

## Claims

1. A method of generating a transmission frame for routing a first message, the first message having a header and first data, the method ensuring that security of data is not compromised by a router (16) and comprising:
generating, with a first trusted guard apparatus (30), a second message by substituting dummy data for the first data in the first message;
supplying the second message to the router and supplying the first data to a second trusted guard apparatus (31);
adding routing information to the second message with the router (16); and
generating, with the second trusted guard apparatus (31), the transmission frame by substituting the first data for the dummy data in the second information message after the routing information is added to the second message.

2. The method of claim 1, wherein the header in the first message identifies a destination for the first message.

3. The method of claim 1 or 2, further comprising sending the transmission frame to the destination according to said routing information.

4. The method of any of claims 1 to 3, wherein the first data is classified at a first security level and the dummy data is classified at a second security level different from the first security level.

5. The method of claim 4, wherein the first security level is a security level designated for information to which access is restricted and the second security level is as level designated for information to which access is not restricted.

6. The method of any of claims 1 to 5, wherein the dummy data is a predetermined pattern of characters.

7. An apparatus for generating a transmission frame for routing a first message, the first message having a header and first data, the apparatus ensuring that security of data is not compromised by a router (16) and comprising:
a first trusted guard apparatus (30) for generating a second message by substituting dummy data for the first data in the first message;
said first trusted guard apparatus (30) supplying said second message to said router (16)
which adds routing information to the second message a second trusted guard apparatus (31) configured to receive the first data from said router (16) wherein said second trusted guard apparatus generates the transmission frame by substituting the first data for the dummy data in the second information message after the routing information is added to the second message.

8. An apparatus according to claim 7, wherein the trusted guard apparatus (30) is configured for sending a data message to a router (16), the data message having information classified at a first security level, the apparatus comprising:
a source authentication unit (19) configured to receive the data message containing the information classified at the first security level, and to add to the data message source information concerning the source of the data message;
a data integrity unit (21) coupled to the source authentication unit and configured to transform the information classified at the first security level to include information for determining the integrity of the information classified at the first security level; and
a data substitution unit (32) coupled to the source authentication unit and configured to generate a dummy data message by substituting dummy data for the information classified at the first security level, and outputting the dummy data message to the router.

9. The apparatus of claim 8, wherein information classified at the first security level is confidential information and the dummy data is non-confidential information.

10. The apparatus of claim 8 or 9, wherein the data integrity unit transforms the information classified at the first security level by applying a digital signature to said information.

11. The apparatus of any of claims 8 to 10, wherein the information concerning the source of the data message added by the source authentication unit is a label identifying the source of the data message.

12. The apparatus of any of claims 8 to 11, further comprising a compression unit (20) coupled to the source authentication unit and configured to compress the information classified at the first security level.

13. The apparatus of claim 12, wherein the compression unit (20) is configured to compress the labeled data by applying a secure hashing algorithm to the information classified at the first security level.

14. A trusted guard apparatus (31) according to claim 7 for routing a data message to a destination node, the data message including confidential information, the apparatus comprising:
a dummy message receiving (33) unit coupled to a router (16) and configured to receive from the router a dummy message containing dummy data and routing information for routing the dummy data message to a destination node;
a confidential data receiving unit (34) coupled to a trusted guard unit and configured to receive from the trusted guard unit the confidential data to be routed to the destination node; and
a message reconstruction unit (35) connected to the dummy data message (33) and confidential data receiving units (34), wherein in response to receiving the dummy data message and the confidential data the message reconstruction unit (35) generates an output message containing the routing information and the confidential data.

15. The trusted guard apparatus of claim 14, further comprising an output unit (36) configured to send the output message to the destination node based on the routing information.

16. A transmission frame generated according to all steps of claim1, for delivering confidential data to a destination node, comprising:
a dummy data field (39) containing dummy data classified at a first security level, substituted for confidential data (38) classified at a second security level different from the first security level;
a message header field (37) containing information identifying the destination node;
a routing field (40) containing routing information for use in routing the transmission frame to the destination node.

17. The transmission frame of claim 16, wherein access to data classified at the first security level is restricted, and access to data classified at the second security level is unrestricted.

## Patentansprüche

1. Verfahren zum Erzeugen eines Übertragungsrahmens zum Leiten einer ersten Mitteilung, welche erste Mitteilung einen Anfangsblock und erste Daten enthält, welches Verfahren sicherstellt, dass die Sicherheit von Daten nicht durch einen Router (16) beeinträchtigt wird, und enthält:
Erzeugen einer zweiten Mitteilung mit einer ersten zuverlässigen Schutzvorrichtung (30), indem die ersten Daten in der ersten Mitteilung durch Blinddaten ersetzt werden;
Zuliefern der zweiten Mitteilung zu dem Router und Zuliefern der ersten Daten zu einer zweiten zuverlässigen Schutzvorrichtung (31);
Hinzufügen von Leitinformationen zu der zweiten Mitteilung mit dem Router (16); und
Erzeugen des Übertragungsrahmens mit der zweiten zuverlässigen Schutzvorrichtung (31), indem in der zweiten Informationsmitteilung die Blinddaten durch die ersten Daten ersetzt werden, nachdem die Leitinformationen zu der zweiten Mitteilung hinzugefügt wurden.

2. Verfahren nach Anspruch 1, bei welchem der Anfangsblock in der ersten Mitteilung einen Bestimmungsort für die erste Mitteilung identifiziert.

3. Verfahren nach Anspruch 1 oder 2, ferner enthaltend das Senden des Übertragungsrahmens zu dem Bestimmungsort gemäß den Leitinformationen.

4. Verfahren nach einem der Ansprüche 1 bis 3, bei welchem die ersten Daten in eine erste Sicherheitsebene klassifiziert werden und die Blinddaten in eine zweite Sicherheitsebene, die von der ersten Sicherheitsebene verschieden ist, klassifiziert werden.

5. Verfahren nach Anspruch 4, bei welchem die erste Sicherheitsebene eine Sicherheitsebene ist, die für Informationen bestimmt ist, auf die der Zugriff beschränkt ist, und die zweite Sicherheitsebene eine Ebene ist, die für Informationen bestimmt ist, auf die der Zugriff nicht beschränkt ist.

6. Verfahren nach einem der Ansprüche 1 bis 5, bei welchem die Blinddaten ein vorbestimmtes Zeichenmuster sind.

7. Vorrichtung zum Erzeugen eines Übertragungsrahmens zum Leiten einer ersten Mitteilung, welche Mitteilung einen Anfangsblock und erste Daten hat, welche Vorrichtung sicherstellt, dass die Sicherheit der Daten nicht durch einen Router (16) beeinträchtigt wird, und enthält:
eine erste zuverlässige Sicherheitsvorrichtung (30) zum Erzeugen einer zweiten Mitteilung, indem die ersten Daten in der ersten Mitteilung durch Blinddaten ersetzt werden;
wobei die erste zuverlässige Sicherheitsvorrichtung (30) die zweite Mitteilung dem Router (16) zuliefert, der Leitinformationen zu der zweiten Mitteilung hinzufügt;
eine zweite zuverlässige Sicherheitsvorrichtung (31), die so konfiguriert ist, dass sie die ersten Daten von dem Router (16) empfängt, wobei die zweite zuverlässige Sicherheitsvorrichtung den Übertragungsrahmen erzeugt, indem die Blinddaten in der zweiten Informationsmitteilung durch die ersten Daten ersetzt werden, nachdem die Leitinformationen zu der zweiten Mitteilung hinzugefügt wurden.

8. Vorrichtung nach Anspruch 7, bei welcher die zuverlässige Sicherheitsvorrichtung (30) zum Senden einer Datenmitteilung zu einem Router (16) konfiguriert ist, welche Datenmitteilung Informationen enthält, die in eine erste Sicherheitsebene klassifiziert sind, welche Vorrichtung enthält:
eine Quellenauthentifizierungsseinheit (19), die so konfiguriert ist, dass sie die in eine erste Sicherheitsebene klassifizierte Informationen enthaltende Datenmitteilung empfängt und zu der Datenmitteilung Quelleninformationen hinzufügt, die die Quelle der Datenmitteilung betreffen;
eine Datenintegritätseinheit (21), die mit der Quellenauthentifizierungsseinheit gekoppelt ist und so konfiguriert ist, dass sie die in die erste Sicherheitsebene klassifizierten Informationen umwandelt, sodass sie Informationen zur Bestimmung der Integrität der in die erste Sicherheitsebene klassifizierten Informationen enthalten; und
eine Datenersetzungseinheit (32), die mit der Quellenauthentifizierungsseinheit gekoppelt ist und so konfiguriert ist, dass die eine Blinddatenmitteilung erzeugt, indem die in die erste Sicherheitsebene klassifizierten Informationen durch Blinddaten ersetzt werden, und die Blinddatenmitteilung an den Router ausgibt.

9. Vorrichtung nach Anspruch 8, bei welcher in die erste Sicherheitsebene klassifizierte Informationen vertrauliche Informationen sind und die Blinddaten nicht vertrauliche Informationen sind.

10. Vorrichtung nach Anspruch 8 und 9, bei welcher die Datenintegritätsei n-heit die in die erste Sicherheitsebene klassifizierten Informationen durch Anbringen einer digitalen Signatur an den Informationen umwandelt.

11. Vorrichtung nach einem der Ansprüche 8 bis 10, bei welcher die die Quelle der Datenmitteilung betreffenden Informationen, die von der Quellenauthentifizierungsseinheit hinzugefügt werden, ein Kennzeichen sind, das die Quelle der Datenmitteilung identifiziert.

12. Vorrichtung einem der Ansprüche 8 bis 11, ferner enthaltend eine Komprimierungseinheit (20), die mit der Quellenauthentifizierungsseinheit gekoppelt ist und so konfiguriert ist, dass die die in die erste Sicherheitsebene klassifizierten Informationen komprimiert.

13. Vorrichtung nach Anspruch 12, bei welcher die Komprimierungseinheit (20) so konfiguriert ist, dass sie die **gekennzeichnet**en Daten komprimiert, indem sie an den in die erste Sicherheitsebene klassifizierten Informationen einen sicheren Hash-Algorithmus anwendet.

14. Sichere Schutzvorrichtung (31) nach Anspruch 7 zum Leiten einer Datenmitteilung zu einem Bestimmungsknoten, welche Datenmitteilung vertrauliche Informationen enthält, welche Vorrichtung enthält:
eine Blindmitteilungsempfangseinheit (33), die mit einem Router (16) gekoppelt ist und so konfiguriert ist, dass sie von dem Router eine Blindmitteilung empfängt, die Blinddaten und Leitinformationen zum Leiten der Blinddatenmitteilung zu einem Bestimmungsknoten enthält;
eine Empfangseinheit (34) für vertrauliche Daten, die mit einer zuverlässigen Schutzeinheit gekoppelt ist und so konfiguriert ist, dass sie von der zuverlässigen Schutzeinheit die zu dem Bestimmungsknoten zu leitenden vertraulichen Daten empfängt; und
eine Mitteilungsrekonstruktionseinheit (35), die mit den Einheiten zum Empfang der Blinddatenmitteilung (33) und der vertraulichen Daten (34) verbunden ist, wobei ansprechend auf den Empfang der Blinddatenmitteilung und der vertraulichen Daten die Mitteilungsrekonstruktionseinheit (35) eine Ausgangsmitteilung erzeugt, die die Leitinformationen und die vertraulichen Daten enthält.

15. Sichere Schutzvorrichtung nach Anspruch 14, ferner enthaltend eine Ausgabeeinheit (36), die so konfiguriert ist, dass sie die Ausgangsmitteilung basierend auf den Leitinformationen zu dem Bestimmungsort sendet.

16. Übertragungsrahmen, erzeugt gemäß allen Schritten nach Anspruch 1, zum Liefern von vertraulichen Daten zu einem Bestimmungsknoten, enthaltend:
ein Blinddatenfeld (39), das in eine erste Sicherheitsebene klassifizierte Blinddaten enthält, die vertrauliche Daten (38) ersetzen, die in eine zweite Sicherheitsebene, die von der ersten Sicherheitsebene verschieden ist, klassifiziert sind;
ein Mitteilungsanfangsblockfeld (37), das Informationen enthält, die den Bestimmungsknoten identifizieren;
ein Leitfeld (40), das Leitinformationen zu Verwendung beim Leiten des Übertragungsrahmens zu dem Bestimmungsknoten enthält.

17. Übertragungsrahmen nach Anspruch 16, bei welchem der Zugriff auf die Daten, die in die erste Sicherheitsebene klassifiziert sind, beschränkt ist, und der Zugriff auf Daten, die in die zweite Sicherheitsebene klassifiziert sind, nicht beschränkt ist.

## Revendications

1. Procédé pour générer une trame de transmission pour router un premier message, le premier message comportant une en-tête et une première donnée, le procédé garantissant que la sécurité des données n'est pas compromise par un routeur (16) et consistant à :
générer, au moyen d'un premier appareil (30) de garde de confiance, un second message en substituant une donnée factice à la première donnée dans le premier message ;
fournir le second message au routeur et fournir la première donnée à un second appareil (31) de garde de confiance ;
ajouter une information de routage au second message avec le routeur (16) ; et
générer, au moyen du second appareil (31) de garde de confiance, la trame de transmission en substituant la première donnée à la donnée factice dans le second message d'information après avoir ajouté l'information de routage au second message.

2. Procédé selon la revendication 1, dans lequel l'en-tête dans le premier message identifie une destination pour le premier message.

3. Procédé selon l'une des revendications 1 à 2, **caractérisé de plus par** l'envoi de la trame de transmission à la destination définie par de ladite information de routage.

4. Procédé selon l'une des revendications 1 à 3, dans lequel la première donnée est classifiée à un premier niveau de sécurité et la donnée factice est classifiée à un second niveau de sécurité différent du premier niveau de sécurité.

5. Procédé selon la revendication 4, dans lequel le premier niveau de sécurité est un niveau de sécurité attribué pour une information à laquelle l'accès est restreint et le second niveau de sécurité est un niveau attribué pour une information à laquelle l'accès n'est pas restreint.

6. Procédé selon l'une quelconque des revendications 1 à 5, dans lequel la donnée factice est un motif prédéterminé de caractères.

7. Appareil pour générer une trame de transmission pour router un premier message, le premier message comportant une en-tête et une première donnée, l'appareil garantissant que la sécurité de la donnée n'est pas compromise par un routeur (16) et comportant :
un premier appareil (30) de garde de confiance pour générer un second message en substituant une donnée factice à la première donnée dans le premier message ;
ledit premier appareil (30) de garde de confiance fournissant ledit second message audit routeur (16) qui ajoute une information de routage au second message ;
un second appareil (31) de garde de confiance configuré pour recevoir la première donnée depuis ledit routeur (16) dans lequel ledit second appareil de garde de confiance génère la trame de transmission en substituant la première donnée à la donnée factice dans le second message d'information après avoir ajouté l'information de routage dans le second message.

8. Appareil selon la revendication 4, dans lequel l'appareil (30) de garde de confiance est configuré pour envoyer un message de données à un routeur (16), le message de données ayant une information classifiée à un premier niveau de sécurité, l'appareil comportant :
une unité (19) d'authentification de source configurée pour recevoir le message de données contenant l'information classifiée au premier niveau de sécurité, et pour ajouter au message de données une information de source concemant la source du message de données ;
une unité (21) d'intégrité de données couplée à l'unité d'authentification de source et configurée pour transformer l'information classifiée au premier niveau de sécurité pour inclure une information pour déterminer l'intégrité de l'information classifiée au premier niveau de sécurité ; et
une unité (32) de substitution de données couplée à l'unité d'authentification de source et configurée pour générer un message à donnée factice en substituant la donnée factice à l'information classifiée au premier niveau de sécurité, et émettre le message à donnée factice à destination du routeur.

9. Appareil selon la revendication 8, dans lequel l'information classifiée au premier niveau de sécurité est une information confidentielle et la donnée factice est une information non confidentielle.

10. Appareil selon l'une des revendications 8 ou 9, dans lequel l'unité d'intégrité de données transforme l'information classifiée au premier niveau de sécurité en appliquant une signature numérique à ladite information.

11. Appareil selon l'une quelconque des revendications 8 à 10, dans lequel l'information concernant la source du message de données ajoutée par l'unité d'authentification de source est une étiquette identifiant la source du message de données.

12. Appareil selon l'une quelconque des revendications 8 à 11, comportant de plus une unité (20) de compression couplée à l'unité d'authentification de source et configurée pour comprimer l'information classifiée au premier niveau de sécurité.

13. Appareil selon la revendication (12) dans lequel l'unité de compression (20) est configurée pour comprimer les données étiquetées en appliquant, à l'information classifiée au premier niveau de sécurité, un algorithme de sécurisation par brouillage.

14. Appareil (31) de garde de confiance selon la revendication 7 pour router un message de données vers un noeud de destination, le message de données comportant une information confidentielle, l'appareil comportant:
une unité (33) de réception d'un message factice couplée à un routeur (16) et configurée pour recevoir du routeur un message factice contenant une donnée factice et une information de routage pour router le message de donnée factice vers un noeud de destination ;
une unité (34) recevant une donnée confidentielle couplée à une unité de garde de confiance et configurée pour recevoir de l'unité de garde de confiance la donnée confidentielle devant être routée vers le noeud de destination ; et
une unité (35) de reconstruction de message reliée à l'unité (33) de réception de message de donnée factice et à l'unité (34) de réception de donnée confidentielle, dans lequel en réponse à la réception du message à donnée factice et de la donnée confidentielle, l'unité (35) de reconstruction de message génère un message de sortie contenant l'information de routage et la donnée confidentielle.

15. Appareil de routage selon la revendication 14, comportant de plus une unité (36) de sortie configurée pour envoyer le message de sortie au noeud de destination en fonction de l'information de routage.

16. Trame de transmission générée selon toutes les étapes de la revendication 1 pour fournir une donnée confidentielle à un noeud de destination, comportant :
un champ (39) de donnée factice contenant une donnée factice classifiée à un premier niveau de sécurité, substituée par une donnée confidentielle (38) classifiée à une second niveau de sécurité différent du premier niveau de sécurité ;
un champ (37) d'en-tête de message contenant une information identifiant le noeud de destination ;
un champ (40) de routage contenant une information de routage pour être utilisée dans le routage de la trame de transmission au noeud de destination.

17. Trame de transmission selon la revendication 16, dans laquelle l'accès à la donnée classifiée au premier niveau de sécurité est restreint et l'accès à la donnée classifiée au second niveau de sécurité n'est pas restreint.
